# EUROPÄISCHE PATENTSCHRIFT

(11) **EP 2 738 410 B1**
(45) Veröffentlichungstag und Bekanntmachung des Hinweises auf die Patenterteilung: **31.05.2017**
(21) Anmeldenummer: 13192438.3
(22) Anmeldetag: 12.11.2013
(51) Int. Cl.: F16D 13/58, F16D 21/06

(54) **Drehmomentübertragungseinrichtung**
Torque transmission device
Dispositif de transmission de couple

(30) Priorität: 29.11.2012 DE 102012221816
(43) Veröffentlichungstag der Anmeldung: 04.06.2014
(73) Patentinhaber: Schaeffler Technologies AG & Co. KG, 91074 Herzogenaurach (DE)
(72) Erfinder: Reimnitz, Dirk, 77815 Bühl (DE)

(56) Entgegenhaltungen:
- EP-A1- 1 862 689
- DE-A1-102010 045 792

## Beschreibung

Die Erfindung betrifft eine Drehmomentübertragungseinrichtung mit zwei Kupplungen zur Verwendung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe, mit mindestens zwei Getriebeeingangswellen, die jeweils mit einer Reibbeläge aufweisenden Kupplungsscheibe einer der Kupplungen drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbindbar und in radialer Richtung zumindest an einer der Getriebeeingangswellen gelagert ist, wobei die Reibbeläge der Kupplungsscheiben zwischen der Zwischendruckplatte und Druckplatten angeordnet sind, die mit Hilfe einer Betätigungseinrichtung in, bezogen auf die Getriebeeingangswellen, axialer Richtung relativ zu der Zwischendruckplatte bewegbar sind, um die Kupplungen zu betätigen.

Die beiden Kupplungsscheiben und die damit zusammenwirkenden Druckplatten bilden eine Doppelkupplung. Bei herkömmlichen Drehmomentübertragungseinrichtungen mit einer Doppelkupplung erweist sich die Lagerung der Doppelkupplung oft als kompliziert.

Solche Drehmomentübertragungseinrichtungen sind z. B. aus der US 3 185 274 bekannt.

Des Weiteren ist es aus der EP 1 850 025 B1 bekannt, die Kupplungsscheibe derart zweigeteilt auszuführen, dass im Rahmen der Montage der Drehmomentübertragungseinrichtung eine erste Vormontagegruppe, umfassend den radial äußeren Teil, getriebeseitig vormontierbar ist, so dass dann z. B. mittels eines Sicherungsrings die Lagerung der Zwischendruckplatte an einer der Getriebeeingangswellen fixierbar ist. Erst dann wird anschießend der radiale Innenteil an dem radial äußeren Teil der Kupplungsscheibe befestigt.

Bei dieser bekannten Vorrichtung zur Fixierung der Lagerung der Zwischendruckplatte müssen wenigstens zwei Teile für die Kupplungsscheibe so produziert werden, dass sie auf einfache Weise wieder miteinander verbunden werden können. Es handelt sich hierbei um zusätzliche Montageteile, die bei der Herstellung entsprechende Kosten verursachen und entsprechende Arbeitsschritte während der Montage der Kupplung bedingen.

Aus der DE 10 2010 045 792 A1 ist eine Gattungsgemäße Doppelkupplung mit einem Sicherungsring bekannt, die Zwischendruckplatte im montierten Zustand axial zumindest in eine Richtung fixiert. Der Sicherungsring wird hierfür in eine Ringnut eingebracht, nachdem das Kupplungsagregat auf das Getriebebauteil aufgezogen wurde.

Es ist daher die Aufgabe der vorliegenden Erfindung, eine einfachere Montagemöglichkeit der Kupplung, das heißt des Kupplungsaggregats, aufzuzeigen, wobei zumindest weniger Teile für die Kupplungsscheibe produziert werden sollen.

Gelöst wird diese Aufgabe durch eine Drehmomentübertragungseinrichtung gemäß dem Oberbegriff von Anspruch 1, bei dem die an einer der Getriebeeingangswelle befestigte Kupplungsscheibe einteilig ausgeführt ist und ein Fixierelement getriebeseitig in Bezug auf die Kupplungsscheibe in einer ersten Position gehalten werden kann, so dass im Rahmen der Montage der Drehmomentübertragungseinrichtung in den Antriebsstrang die Kupplungsscheibe so vormontierbar ist, dass nach oder während ihrer Montage das Fixierelement von der ersten Position in eine zweite Position verlagert werden kann, so dass die Lagerung der Zwischendruckplatte, welche getriebeseitig vor der Kupplungsscheibe angeordnet ist, an einer Getriebeeingangswelle durch das Fixierelement in axialer Richtung fixiert wird.

Erfindungsgemäß ist dabei vorgesehen, dass die Zwischendruckplatte und die motorseitige Kupplungsscheibe einer gemeinsamen Unterbaugruppe zugeordnet sind und so gemeinsam getriebeseitig vormontierbar sind. Das Fixierelement befindet sich dann sowohl in der ersten, als auch zweiten Position zwischen der Zwischendruckplatte und der antriebsseitigen Kupplungsscheibe.

Erfindungsgemäß ist weiterhin vorgesehen, dass das Fixierelement bereits vor der Montage der Kupplungsscheibe in einer ersten Position von einer Haltekontur gehalten wird. Auf diese Weise befindet sich das Fixierelement in einer definierten Position zwischen der Kupplungsscheibe und der Zwischendruckplatte. Ein späteres Einbringen des Fixierelements, nachdem die Kupplungsscheibe montiert wurde, ist dann nicht mehr notwendig. Insbesondere kann es vorgesehen sein, dass die Haltekontur und das Fixierelement gemeinsam mit der Kupplungsscheibe, gegebenenfalls auch mit der Zwischendruckplatte, zu einer ersten Vormontagegruppe der Drehmomentübertragungseinrichtung gehört.

Die Haltekontur ist so ausgelegt, dass sie das Fixierelement in der definierten ersten Position zwischen der Kupplungsscheibe und der Zwischendruckplatte hält. Hierfür ist erfindungsgemäß vorgesehen, dass es sich bei der Haltekontur um ein Element aus der Gruppe Nut, radial übergreifendes Halteelement, durch die Kupplungsscheibe durchgreifendes Halteelement und axialerunterbrochene Haltekontur handelt. Bei der Nut kann es sich um eine Nut handeln, die getriebeseitig in einer Nabe der Kupplungsscheibe, oder antriebsseitig in oder an einer Verlängerung des Innenrings der Lagerung der Zwischendruckplatte, oder in der Getriebeeingangswelle motorseitig vor der Zwischendruckplatte angeordnet ist. Befindet sich die Nut motorseitig in der Getriebeeingangswelle, so kann es vorgesehen sein, dass das Fixierelement bereits in diese Nut eingebracht wird bzw. in der Nut bereitgestellt ist, bevor die Vormontagegruppe, bestehend aus Zwischendruckplatte und Kupplungsscheibe, auf die Getriebeeingangswelle aufgeschoben wird. Hierbei ist dann erfindungsgemäß vorgesehen, dass die Getriebeeingangswelle motorseitig verjüngt ist, so dass die radiale Kontur des Fixierelements innerhalb dieser Nut so klein ist, dass immer noch die Zwischendruckplatte mit ihrer Lagerung auf diesen Bereich aus abgeflachter Getriebeeingangswelle und Fixierelement innerhalb der Nut schiebbar ist.

Während eine Nut das Fixierelement von radial unten hält, kann es vorgesehen sein, dass das Halteelement als radial übergreifendes Halteelement ausgebildet ist. Dieses Halteelement ist dann zumindest teilweise axial in den Zwischenraum zwischen Zwischendruckplatte und Kupplungsscheibe hineingreifend ausgeführt und hält das Fixierelement zum Beispiel mittels Federkräfte. Vorzugsweise ist dieses Halteelement dann wenigstens so mit der Kupplungsscheibe verbunden, so dass es von der Motorseite der Kupplungsscheibe manipuliert werden kann, um das Fixierelement in die zweite Position zu verlagern. Bei dem Halteelement kann es sich auch um ein Halteelement handeln, welches nur teilweise zwischen der Kupplungsscheibe und der Zwischendruckplatte angeordnet ist. Hierfür ist es beispielsweise als durch die Kupplungsscheibe durchgreifendes Halteelement ausgebildet, wobei es insbesondere über- oder untergreifend in radialer Richtung in Bezug auf das Fixierelement ausgebildet sein kann. Vorteilhafter Weise kann dieses Halteelement dann auch nach einer Verwendung zur Verlagerung des Fixierelements in die zweite Position von der Kupplungsscheibe getrennt und in einer anderen Montagegruppe erneut verwendet werden.

Mittels axial unterbrochener Konturen des Halteelements kann dieses vorzugsweise in entsprechende, bevorzugt radial unterbrochene, Konturen der Sicherungsscheibe eingreifen und diese so in der ersten Position halten.

Um die Lagerung der Zwischendruckplatte an einer Getriebeeingangswelle axial zu fixieren, sind erfindungsgemäß unterschiedliche alternative Fixierelemente vorgesehen. Es kann sich hierbei insbesondere um ein Element der Gruppe Sicherungsring, geschnitzter Sicherungsring, radial unterbrochener Sicherungsring, das heißt eine in radialer Richtung ausgefranzte Kontur aufweisender Sicherungsring, Sicherungsscheibe, segmentierter Sicherungsring, das heißt ein Sicherungsring mit jeweils umfangsmäßig voneinander beabstandeten Segmenten, mehrteiliger Sicherungsring, das heißt ein Sicherungsring, der insbesondere so ausgebildet ist, dass diese Teile ineinander zusammenfassend sich radial wiederum gegenseitig sichern, Rundradring, das heißt als runder Ring mit einer geringen radialen Dicke, welcher besonders geeignet ist, in eine Nut der Getriebeeingangswelle in der ersten Position bevorratet zu werden und hierbei insbesondere elastisch so ausgebildet ist, dass er unter Spannung in der ersten Position und ebenfalls noch unter Spannung aber ausgeweitet in der zweiten Position immer noch unter Spannung steht, Springring, oder Wellenmutter handeln. Bei der Wellenmutter handelt es sich um eine Mutter, die auf ein entsprechendes Gewinde der Getriebeeingangswelle bzw. auf ein entsprechendes motorseitiges Ende der Getriebeeingangswelle aufgeschraubt werden kann.

Um das Fixierelement von der definierten ersten Position in eine zweite Position zum axialen Fixieren der Lagerung der Zwischendruckplatte zu verlagern, das heißt das Fixierelement entsprechend zu manipulieren bzw. die Haltekontur entsprechend zu bedienen, ist es erfindungsgemäß vorgesehen, dass die Kupplungsscheibe, oder die Mitnehmerscheibe, oder beide entsprechende Durchgrifföffnungen aufweisen, die ausreichend groß bzw. eine passende Kontur haben, um ein Werkzeug zum durchgreifenden Betätigen des Fixierelements einen Durchlass zu ermöglichen bzw. einem entsprechenden Werkzeug zum entsprechenden Betätigen der Haltekontur einen entsprechenden Durchgriff zu erlauben.

Um zum Beispiel ein Aufweiten des Fixierelements zur Verlagerung des Fixierelements in die zweite Position, das heißt zum Beispiel in eine entsprechende Nut vor der Lagerung der Zwischendruckplatte zu unterstützen, ist es erfindungsgemäß in einer Weiterbildung vorgesehen, dass die Getriebeeingangswelle eine antriebsseitige Kontur aufweist, welche diese Verlagerung des Fixierelements, das heißt diese Betätigung oder Manipulation des Fixierelements zur oder in die zweite Position wenigstens unterstützt. Insbesondere ist diese Kontur so ausgebildet, dass bei der Verlagerung des Fixierelements aus der ersten Position auch ein Kontrollverlust über das Fixierelement nicht dazu führen kann, dass das Fixierelement in andere Bereiche der Drehmomentübertragungseinrichtung rutschen kann. Erfindungsgemäß bleibt es dann an dieser Kontur, die zum Beispiel dann über die Nabe der Kupplungsscheibe greift, so dass es einen Überlappungsbereich gibt, hängen.

Zusätzlich zu den Durchgriffsöffnungen oder alternativ dazu kann die Kupplungsscheibe oder die Mitnehmerscheibe der Kupplungsscheibe erfindungsgemäß Aussparungen aufweisen, welche wenigstens geeignet sind, durchgreifende Fortsätze des Halteelements oder andere Teile des Halteelements aufzunehmen, so dass mittels dieser Fortsätze entweder das Halteelement betätigt, oder nach einer Betätigung des Halteelements dieses mit diesen Fortsätzen aus den Aussparungen heraus und damit auch aus der Kupplungsscheibe heraus entnommen werden kann, oder dass insbesondere segmentierte oder mehrteilige Fixierelemente durch diese Aussparungen in den Bereich zwischen Kupplungsscheibe und Zwischendruckplatte gebracht werden können.

Um eine Montage oder Demontage des Fixierelements zu erleichtern, ist es vorgesehen, dass die Getriebeeingangswelle im Bereich der zweiten Position, das heißt insbesondere im Bereich einer Nut, zur Aufnahme des Fixierelements zum axialen Fixieren der Lagerung der Zwischendruckplatte axiale Längsschlitze aufweist. Diese axialen Längsschlitze greifen dabei radial, bevorzugt tiefer in die Getriebeeingangswelle ein, als die Nut zur Aufnahme des Fixierelements. Mittels eines Werkzeugs kann dann das Fixierelement in der zweiten Position, oder zur Verlagerung bis in die zweite Position, untergriffen und gegebenenfalls aufgeweitet bzw. axial verschoben werden.

Erfindungsgemäß ist in einer Weiterbildung der Erfindung vorgesehen, dass die Fixierelemente zur einfacheren Verlagerung bzw. Betätigung eine oder mehrere Anschlusskorrekturen aufweisen. Diese Anschlusskorrekturen sind geeignet, um mit einem entsprechenden Werkzeug zusammenzuwirken. Es handelt sich dabei zum Beispiel um gebogene Fortsätze, entweder radial nach innen oder außen abstehend und dann axial in Richtung des Antriebs oder in Richtung des Getriebes gebogen. Es können auch Fortsätze mit Hinterschnitten sein, oder bevorzugt gelochte Bereiche innerhalb der Fixierelemente oder in von diesen abstehenden Fortsätzen, in die entsprechende Werkzeuge eingreifen können.

In einer weiteren erfinderischen Ausführungsform ist es vorgesehen, dass wenigstens ein Teil der Kupplungsscheibe axial beweglich ausgeführt sein soll. Es kann sich hierbei beispielsweise um einen radial innen liegenden Bereich der Mitnehmerscheibe handeln, welche so verlagert werden kann, dass dieser Bereich die Verlagerung des Fixierelements in die zweite Position zumindest werkzeugmäßig unterstützen kann. Erfindungsgemäß kann es sich hierbei aber auch um ein Teil handeln, das radial in den Bereich der ersten und/oder zweiten Position hineinreicht und dabei axial beweglich ist. Auf diese Weise kann radial von außen auf einen radial äußeren Bereich des Fixierelements eingegriffen und dieses entsprechend von radial außen betätigt uns/oder axial verlagert werden. Insbesondere ist dabei vorgesehen, dass dieser Teil mit der Getriebeeingangswelle als Werkzeug zusammenwirken kann. So kann die Getriebeeingangswelle gemeinsam mit diesem Teil umfangsmäßig gegen die andere Getriebeeingangswelle verdreht werden, wobei auf der anderen Getriebeeingangswelle die Zwischendruckscheibe auf ihrer Lagerung gelagert ist.

Das Teil kann als radial in den Bereich der zweiten Position hineinreichendes Blechteil ausgebildet sein, welches auf eine entsprechende Wellenmutter in der Art eines Schraubenschlüssels einwirkt und dieses entsprechend umfangsmäßig verdreht, um die Lagerung, welche nicht mitgedreht wird, entsprechend axial spielfrei zu fixieren.

Ausführungsbeispiele, auf die die Erfindung nicht beschränkt ist und aus denen sich eigenständige erfinderische Merkmale ergeben können, sind in den folgenden Figuren dargestellt. Es zeigen:
- Figur 1: eine Drehmomentübertragungseinrichtung mit einer Kupplungsscheibe im Längsschnitt,
- Figur 2: eine Drehmomentübertragungseinrichtung mit einem Sicherungsring in einer ersten und zweiten Position,
- Figur 3: eine Kupplungsscheibe mit Sicherungsring und einem radial übergreifenden Halteelement,
- Figur 4: eine Kupplungsscheibe mit einem alternativen Halteelement,
- Figur 5: eine Kupplungsscheibe gemäß Figur 4 mit verlagertem Sicherungsring,
- Figur 6: eine Drehmomentübertragungseinrichtung und Drahtring als Fixierelement,
- Figur 7: die Drehmomentübertragungseinrichtung gemäß Figur 6 mit dem Runddrahtring in fixierender zweiter Position,
- Figur 8: ein Lager der Zwischendruckplatte mit in axialer Richtung unterbrochener Kontur als Haltekontur,
- Figur 9a, b: die Fixiereinrichtung gemäß Figur 8 in einer ersten und zweiten Position auf einer äußeren Getriebeeingangswelle,
- Figur 10a-c: alternative Ausführungsformen des Fixierelements,
- Figur 11: einen Querschnitt durch den Bereich der Drehmomentübertragungseinrichtung, in dem die Lagerung der Zwischendruckplatte mittels einer Wellenmutter fixiert wird,
- Figur 12: einen Ausschnitt gemäß Figur 11 mit Blechen der Belagfederung als Werkzeug zur Arretierung der Wellenmutter und
- Figur 13: die Drehmomentübertragungseinrichtung gemäß Figur 12 mit axial aus dem Betriebsbereich entfernten Blechen.

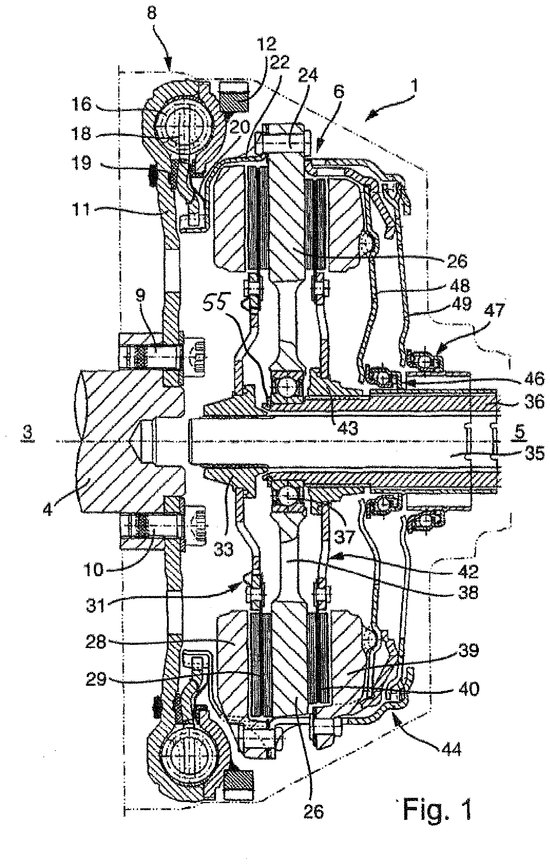

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine Doppelkupplung 6 angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über Schraubverbindungen 9, 10 fest mit einem Eingangsteil 11 der Drehschwingungsdämpfungseinrichtung 8 verbunden. Das Eingangsteil 11 der Drehschwingungsdämpfungseinrichtung 8 hat im Wesentlichen die Gestalt einer sich in radialer Richtung erstreckenden Kreisringscheibe, die radial außen einen Schwingungsdämpferkäfig bildet. An dem Eingangsteil 11 ist radial außen ein Anlasserzahnkranz 12 befestigt. In dem Schwingungsdämpferkäfig ist mindestens eine Energiespeichereinrichtung, insbesondere eine Federeinrichtung 16, zumindest teilweise aufgenommen. In die Federeinrichtung 16 greift ein Ausgangsteil 18 der Schwingungsdämpfungseinrichtung 8 ein. Zwischen dem Eingangsteil 11 und dem Ausgangsteil 18 ist ein Gleit-/Reibring 19 angeordnet, der an dem Eingangsteil 11 befestigt ist. Zwischen dem Ausgangsteil 18 und einem Kupplungsgehäuseteil 22 ist eine Tellerfeder 20 so vorgespannt, dass das Ausgangsteil 18 der Drehschwingungsdämpfungseinrichtung 8 gegen den Gleit-/Reibring 19 gedrückt wird.

Radial innen ist das Ausgangsteil 18 der Drehschwingungsdämpfungseinrichtung 8 lösbar, das heißt zerstörungsfrei trennbar, mit dem Kupplungsgehäuseteil 22 verbunden. An dem Kupplungsgehäuseteil 22 ist mit Hilfe von Nietverbindungen, von denen in der Schnittdarstellung nur eine Nietverbindung 24 zu sehen ist, eine Zwischendruckplatte 26 befestigt. Antriebsseitig sind zwischen der Zwischendruckplatte 26 und einer Druckplatte 28 Reibbeläge 29 einer ersten Kupplungsscheibe 31 einklemmbar. Die erste Kupplungsscheibe 31 ist über ein Nabenteil 33 drehfest mit einer ersten Getriebeeingangswelle 35 verbunden, die als Vollwelle ausgebildet ist. Die erste Getriebeeingangswelle 35 ist in einer zweiten Getriebeeingangswelle 36, die als Hohlwelle ausgebildet ist, drehbar angeordnet. An dem antriebsseitigen Ende der zweiten Getriebeeingangswelle 36 ist mit Hilfe eines Wälzlagers 37 ein Nabenteil 38 drehbar gelagert, an dem radial außen die Zwischendruckplatte 26 angebracht ist. Getriebeseitig sind zwischen der Zwischendruckplatte 26 und einer Druckplatte 39 Reibbeläge 40 einer zweiten Kupplungsscheibe 42 einklemmbar. Die zweite Kupplungsscheibe 42 ist über ein Nabenteil 43 drehfest mit einer zweiten Getriebeeingangswelle 36 verbunden.

Die Doppelkupplung 6 weist ein Kupplungsgehäuse 44 auf, an dem die Druckplatten 28, 39 axial verschiebbar drehfest angebracht sind. Außerdem ist die Zwischendruckplatte 26 an dem Kupplungsgehäuse 44 befestigt. Das Kupplungsgehäuse 44 ist über das Kupplungsgehäuseteil 22 und die Drehschwingungsdämpfungseinrichtung 8 mit der Kurbelwelle 4 verbunden. Die Doppelkupplung 6 wird in bekannter Art und Weise über Betätigungseinrichtungen 46, 47, die mit Betätigungshebel 48, 49 zusammenwirken, betätigt.

Die Figur 1 zeigt ein Doppelkupplungssystem, wie es aus dem Stand der Technik bekannt ist, welches zum Beispiel eine teilbare Kupplungsscheibe 31 zum Montieren des Sicherungsrings 55 aufweist. Diese Abbildung dient im Wesentlichen zur Veranschaulichung des Standes der Technik und zur Übersicht um die Lage des Sicherungsrings 55 im Bereich der Doppelkupplung 6 zwischen der Kupplungsscheibe 31 und der Zwischendruckplatte 26 zu zeigen. Die folgenden Figuren beschränken sich auf Ausschnitte der Kupplungsscheibe 31 oder des Bereichs zwischen der Kupplungsscheibe 31 und der Zwischendruckplatte 26, mit einem Sicherungsring 55 und/oder den Getriebeeingangswellen 35 und 36.

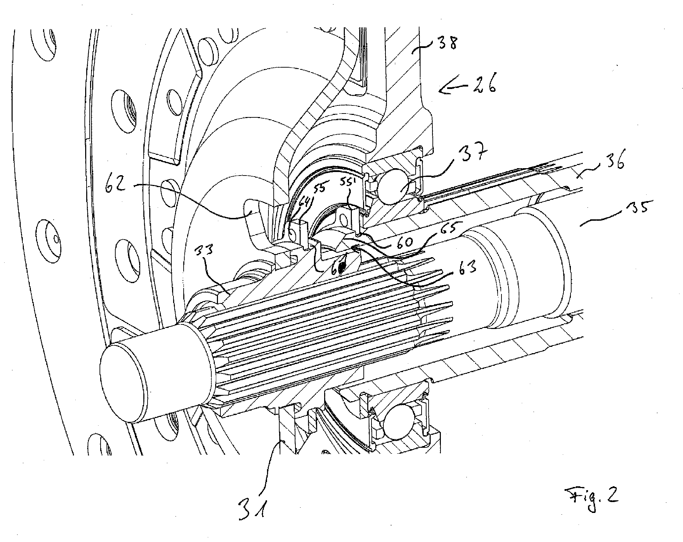

So zeigt die Figur 2 eine erste Ausführungsform einer Haltekontur für den Sicherungsring 55 (das Fixierelement) in Form einer Nut 61 auf der Nabe 33 der Kupplungsscheibe 31. Der Sicherungsring 55 kann hier beispielsweise als geschlitzter Sicherungsring bereitgestellt sein. In der hier dargestellten Figur befindet sich der Sicherungsring 55 zunächst in der ersten Position, das heißt in einer Parkposition, in welcher er bereits vor der Verbindung der Doppelkupplung 6 mit den Getriebeeingangswellen 35, 36 positioniert wurde. Nach dem Aufstecken der Doppelkupplung 6 auf die Getriebeeingangswellen 35, 36 wird der Sicherungsring 55 aus der Nut 61 mittels eines nicht dargestellten Werkzeugs in die zweite Position, das heißt in die Nut 60 auf der hohlen Getriebeeingangswelle 36 verbracht, wo der Sicherungsring dann die Lagerung 37, im hier dargestellten Fall ein Wälzlager, der Zwischendruckplatte 26 axial sichert. Der Übersicht halber sind hier zwei Sicherungsringe 55, 55' in der ersten und zweiten Position in den Nuten 61 und 60 dargestellt, um das Prinzip zu zeigen, wie der Sicherungsring 55 aus der Parkposition in die axial sichernde Position in die Nut 60 verbracht wird. In Wirklichkeit ist nur ein Sicherungsring 55 in einer der beiden Positionen vorhanden.

Um den Sicherungsring 55 aus der Nut 61 in die Nut 60 zu verbringen, weist er eine Anschlusskontur in Form eines Loches 64 auf, in welches ein geeignetes Werkzeug durch eine Durchgriffsöffnung 62 durch die Kupplungsscheibe 31 eingreifen kann. Mit einem geeigneten Werkzeug kann dann durch eine Kontaktierung des Werkzeugs in das Loch 64 der Sicherungsring 55 aufgeweitet und aus der Nut 61 herausgenommen und in die Nut 60 verbracht werden, wo dann der Sicherungsring 55 nach dem Entfernen des Werkzeugs wieder gespannt einliegt. Damit der Sicherungsring 55 beim Herausrutschen aus einem Werkzeug nicht verloren gehen kann oder auf die volle Getriebeeingangswelle 35 aufliegen kann, weist die Nabe 33 der Kupplungsscheibe 31 eine Verlängerung auf bzw. die Getriebeeingangswelle 36 eine entsprechende antriebsseitige Form auf, so dass es zu einer Überschneidung, das heißt zu einem Überlappungsbereich 63 zwischen der äußeren Getriebeeingangswelle 36 und der Nabe 33 kommt. Auch wird an dieser Stelle durch eine entsprechende Kontur 65 des antriebsseitigen Endes der äußeren Getriebeeingangswelle 36 ein Aufweiten des Sicherungsrings 55 zur Verlagerung in die Nut 60 in der zweiten Position wenigstens unterstützt.

Um die Verlagerung des Sicherungsrings 55 zu vereinfachen, sind jeweils mehrere Löcher 64 und möglichst hiermit abgeglichene Durchgriffsöffnungen 62 vorgesehen. Als Anschlusskonturen sind statt des Loches 64 auch andere Konturen, wie zum Beispiel angeschrägte Kanten oder Winkel, vorstellbar.

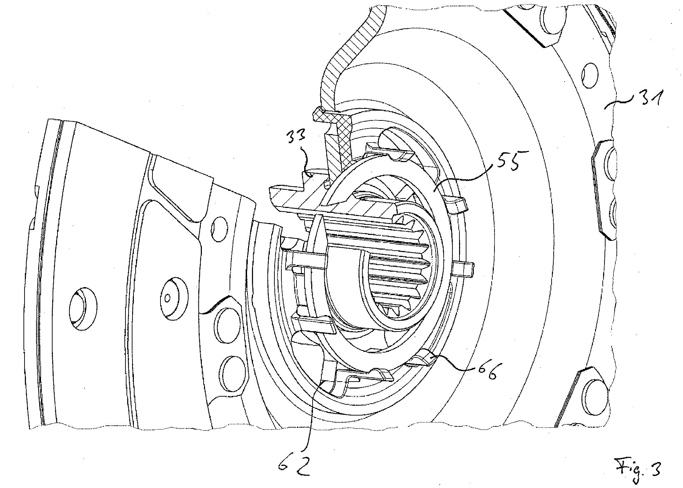

Die Figur 3 zeigt ein Beispiel für eine Kupplungsscheibe 31, bei der der Sicherungsring 55 nicht an seiner Innen-, sondern an seiner Außenseite gehalten wird. Hierfür ist eine entsprechende Haltekontur in Form eines radial übergreifenden Halteelements 66 vorgesehen. Dieses Halteelement 66 weist Vorsprünge zum Übergreifen des Sicherungsrings 55 auf, so dass diese unter Spannung in diesem radial übergreifenden Halteelement 66 "geparkt" werden kann. Durch die Durchgriffsöffnungen 62 kann dann wieder ein Werkzeug entweder auf das Haltelement 66 und/oder den Sicherungsring 55 einwirken und die Federkräfte bzw. einspannende Kräfte des Halteelements 66 durch eine axiale Bewegung des Sicherungsrings 55 überwinden. Auf diese Weise kann der Sicherungsring 55 dann in die zweite Position verbracht werden. Bei geeigneter Kontur 65 der Getriebeeingangswelle 36 sind dann gegebenenfalls auch keine Anschlusskonturen, wie Löcher 64, am Sicherungsring 55 notwendig.

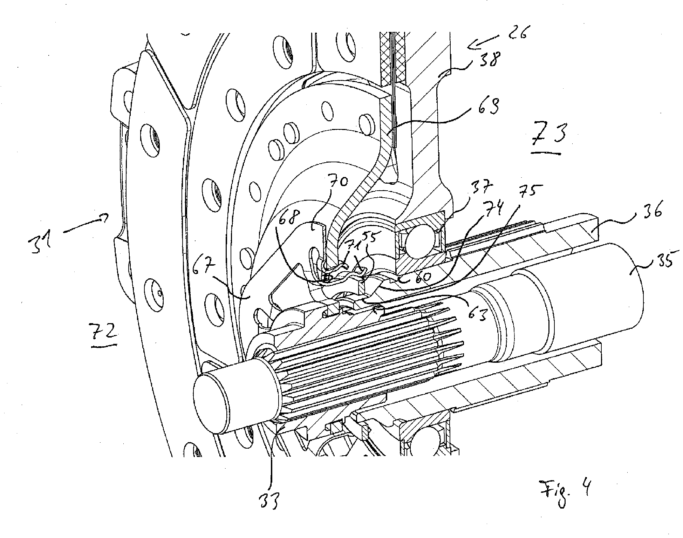

Während das Halteelement 66 in der Figur 3 fest mit der Kupplungsscheibe 31 verbunden ist, zeigt die Figur 4 einen Ausschnitt aus der Drehmomentübertragungseinrichtung, bei der ein wiederverwendbares Halteelement 67 durch Aussparungen 68 der Kupplungsscheibe 31 hindurchgeführt wurde und so von außen mittels Fortsätzen 71 das Sicherungselement 55 in der ersten Position analog zur Figur 3 lagert. In der abgebildeten Ausführungsform verfügt das wiederverwendbare Halteelement 67 über zwei unterschiedliche Fortsatztypen 71, 71', die das Halteelement mit der Kupplungsscheibe und/oder mit dem Sicherungsring 55 verbinden. Wie in der Figur 3 beschrieben, kann der Sicherungsring 55 dann über ein nicht gezeigtes Werkzeug durch Durchgriffsöffnungen 62, oder direkt durch Aussparungen 68 hindurch, auf den Sicherungsring 55 axial einwirken. Wie hier dargestellt, weist die äußere Getriebeeingangswelle 36 für diesen Vorgang eine Konuskontur 74 auf, welche den Sicherungsring 55 zur Verlagerung in die Nut 60 entsprechend aufweitet. Des weiteren ist ein zylindrischer Fortsatz 75 am antriebsseitigen Ende der äußeren Getriebeeingangswelle 36 vorgesehen, auf welchem der Sicherungsring 55 nach Entnahme aus dem wiederverwendbaren Halteelement 67 abgelegt und axial bewegt werden kann.

Die Kupplungsscheibe 31 trennt den Antriebsstrang in eine Antriebsseite 72 und eine Getriebeseite 73 auf. Auf diese Weise kann dem wiederverwendbare Halteelement 67 ein Bereich auf der Antriebsseite 72 in Form eines Ringkörpers 70 zugeordnet werden, während auf der Getriebeseite 73 der Kupplungsscheibe 31, d.h. in den Bereich zwischen Kupplungsscheibe 31 und Zwischendruckplatte 26 ausschließlich die Fortsätze 71 durch die Kupplungsscheibe 31 durchgreifen.

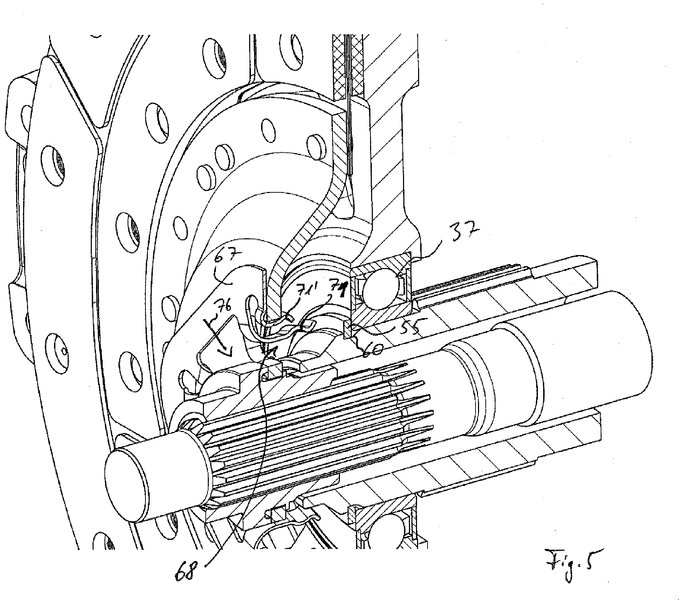

Die Figur 5 zeigt das wiederverwendbare Halteelement 67 nach dem Verbringen des Sicherungsrings 55 in die Nut 60. Erkennbar ist die Lagerung 37, d. h. das Wälzlager, jetzt axial durch den Sicherungsring 55 gesichert. Das wiederverwendbare Halteelement 67 wird durch radial äußeren Fortsätze 71' in den Aussparungen 68 gehalten. Diese Halterung basiert im Wesentlichen auf einer Federkraft der Fortsätze 71', welche durch eine geeignete Radialkraft 76 überwunden werden kann. Dann können die Fortsätze 71' und 70 durch die Aussparung 68 hindurch von der Getriebeseite 73 vollständig auf die Antriebsseite 72 verbracht werden, so dass das wiederverwendbare Halteelement 67 insgesamt aus dem Antriebsstrang 1 entfernt werden kann und für weitere Montagevorgänge verwendbar ist.

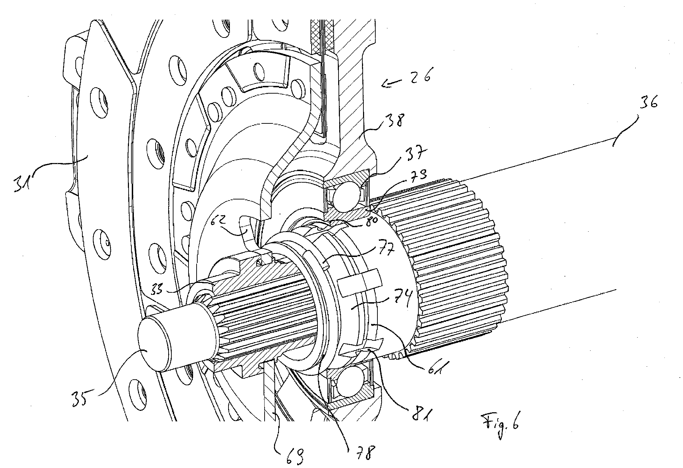

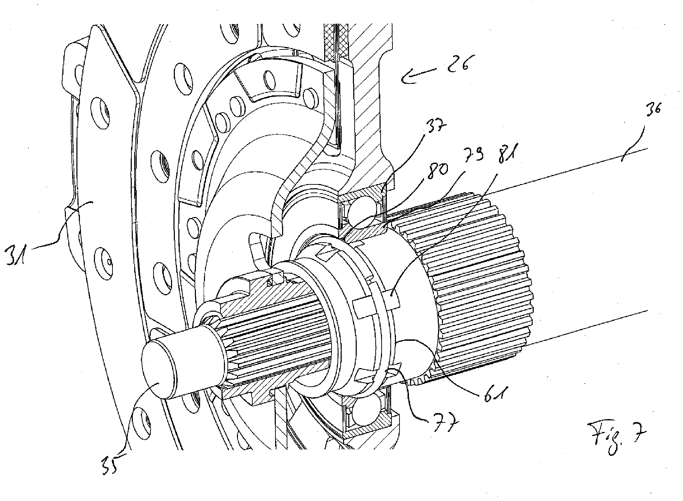

Ein weiteres Beispiel für erste und zweite Positionen für ein Fixierelement ist in den Figuren 6 und 7 dargestellt. Hier ist das Fixierelement in Form eines Runddrahtrings dargestellt, welcher sich diesmal nicht im Bereich der Kupplungsscheibe 31 in einer ersten Parkposition befindet, sondern in einem Wellenabschnitt 78 der äußeren Getriebeeingangswelle 36. Dieser Wellenabschnitt 78 ist dabei so verjüngt, dass der Außendurchmesser des auf diesem Wellenabschnitts liegenden Drahtrings immer noch kleiner ist als der Innendurchmesser des Lagerinnenrings 79. Diese Anforderung ist bei der gezeigten Ausführungsform erfüllt, da der Durchmesser des Wellenabschnitts plus dem doppelten Drahtdurchmesser des Runddrahtrings kleiner ist als der Innendurchmesser des Lagers. Auf diese Weise kann auch hier die Zwischendruckplatte 26 mit ihrer Lagerung 37 gemeinsam mit der Kupplungsscheibe 31 als Vormontageeinheit über die beiden Getriebeeingangswellen 35, 36 und damit auch über den Runddrahtring 77 geschoben werden. Wenn sich dann die Zwischendruckplatte 26 auf der äußeren Getriebeeingangswelle 36 abstützt und die Kupplungsscheibe 31 mit ihrer Nabe 33 auf der inneren Getriebeeingangswelle 35 verdrehsicher gelagert ist, befindet sich der Runddrahtring 77 wieder zwischen der Zwischendruckscheibe 26 und der Kupplungsscheibe 31. Mittels eines geeigneten Werkzeugs kann wieder durch die Durchgriffsöffnungen 62 der Runddrahtring 77, welcher eine hohe Elastizität aufweist, so weit, gegebenenfalls unter Verwendung einer Konuskontur 74 der äußeren Getriebeeingangswelle 36, geweitet werden, dass er aus dieser ersten Position in die Nut 61 zur axialen Fixierung der Lagerung 37 verbracht wird. Die Lagerung 37 weist weiterhin einen Hinterschnitt 80 am Lagerinnenring 79 auf, welcher sich axial an dem Runddrahtring 77 abstützt. Der Runddrahtring 77 wiederum kann sich in radialer Richtung am Hinterschnitt des Lagerinnenrings 79 abstützen, wodurch ein Herausrutschen des Runddrahtrings 77 aus der Wellennut 61 ausgeschlossen ist, solange des Lager 37 in radialer Richtung am Runddrahtring 77 anliegt. Für die Montage und die Demontage des Sicherungsrings, d. h. des Runddrahtrings 77, muss das Lager und damit fast die gesamte Kupplung weiter Richtung Getriebe geschoben werden. Dieses ist in der Figur 7 deutlich erkennbar.

In der Figur 7 ist der Runddrahtring 77 so weit geweitet, dass es keinen Überlappungsbereich in Umfangsrichtung mehr gibt. Er liegt in der Nut 61 im Hinterschnitt 80 des Innenlagerrings 79 der Lagerung 37 der Zwischendruckplatte 26. Zur Unterstützung sowohl der Montage des Runddrahtrings 75, als auch zu seiner Demontage weist die äußere Getriebeeingangswelle 36 Längsschnitte 81 auf, welche axial im Bereich der Nut 61 verlaufen. Insbesondere reichen diese Längsschnitte 81 radial tiefer in die äußere Getriebeeingangswelle 36, als die Nut 61 ein. Dieses ist in Figur 6 gut erkennbar. Auf diese Weise kann mit einem Werkzeug zur Montage oder Demontage des Runddrahtrings 77 unter diesen selbst in der Nut 61 gegriffen werden, so dass er entsprechend gedehnt (aufgeweitet) werden kann.

Diese axiale Sicherung kann dabei auch mit anderen Sicherungsringen als dem hier beschriebenen Runddrahtring 77 bewerkstelligt werden. Wichtig ist noch, dass über die Betätigungseinrichtungen 46, 47 die Kupplung so axial mit Druck beaufschlagt wird, dass sie im montierten Zustand eine axiale Verspannung der Lagerung 37 über den Hinterschnitt 80 gegen den Runddrahtring 77 erfährt. Zur Montage des Runddrahtrings 77 in die Nut 61 wird die Lagerung 37 zunächst gegen die Kraft der Betätigungseinrichtungen 46, 47 axial verstellt und nach der Verlagerung des Runddrahtrings 77 wird dann, wie beschrieben, die axiale Verspannung erzeugt.

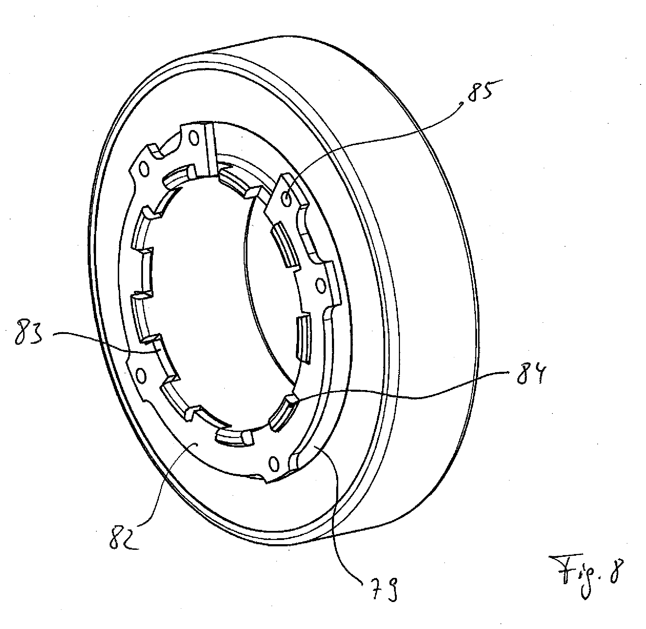

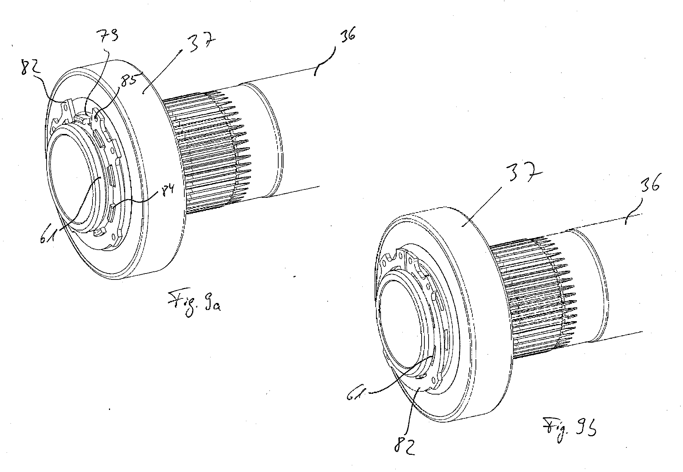

Eine weitere Möglichkeit, einen Sicherungsring 82 in eine Nut 61 zu verbringen, zeigen die Figuren 8, 9a und 9b. Der Sicherungsring 82 ist geschlitzt und aufgeweitet in der Figur 8 dargestellt und in einer ersten Position auf dem Lagerinnenring 79 des Lagers 37 gehalten. Hierfür weisen der Sicherungsring 82 radial innen und der Lagerinnenring 79 in axialer Richtung jeweils eine unterbrochene Kontur 83, 84 auf. Die so entstehenden Fortsätze sind ähnlich einer Verzahnung ineinander gesteckt. Dies ermöglicht bei der hier gewählten Geometrie und den aufeinander abgestimmten Bauteilen (Aufeinanderabpassung), dass der Sicherungsring 82 in einer aufgeweiteten Position auf die axiale Kontur 84 des Lagerinnenrings 79 gesteckt werden kann. Diese Montage erfolgt vor dem Montageschritt des Anbringens der Doppelkupplung 6 auf die Getriebeeingangswellen 35, 36. Der so gehaltene Sicherungsring 82 wird dann gemeinsam mit der Vormontagegruppe, welche wenigstens die Zwischendruckplatte 26 und die Kupplungsscheibe 31 umfasst, auf die Getriebeeingangswellen 35, 36 geschoben. Dieser Zustand ist vereinfacht in Figur 9a dargestellt. Hierbei ist wichtig, dass der Innendurchmesser des aufgeweiteten Sicherungsrings 82 geringfügig größer ist als der Innendurchmesser des Lagerinnenrings 79. Sie dürfen höchstens den gleichen Durchmesser aufweisen. Mittels eines Werkzeugs und der in den anderen Figuren beschriebenen Durchgangsöffnungen 62 für das Werkzeug in der Kupplungsscheibe 31 kann der Sicherungsring 82 dann durch Kontaktierung bzw. Beaufschlagung der Löcher 85 als Anschlusskonturen für ein Werkzeug von diesem von der axialen Kontur 84 axial von dem Lagerinnenring 79 in die Nut 61 der äußeren Getriebeeingangswelle 36 verbracht werden. Dieser Zustand ist in Figur 9b dargestellt, wo der Sicherungsring 82 im entspannten Zustand mit kleinerem Schlitz in der Nut 61 die Lagerung 37 axial sichert.

Statt der Löcher 85 in den Fortsätzen des Sicherungsrings 82 können diese auch zur Kontaktaufnahme mit einem Werkzeug gebogen, mit Hinterschnitten versehen oder sonst wie an eine entsprechende Gegenkontur des Werkzeugs angepasst sein.

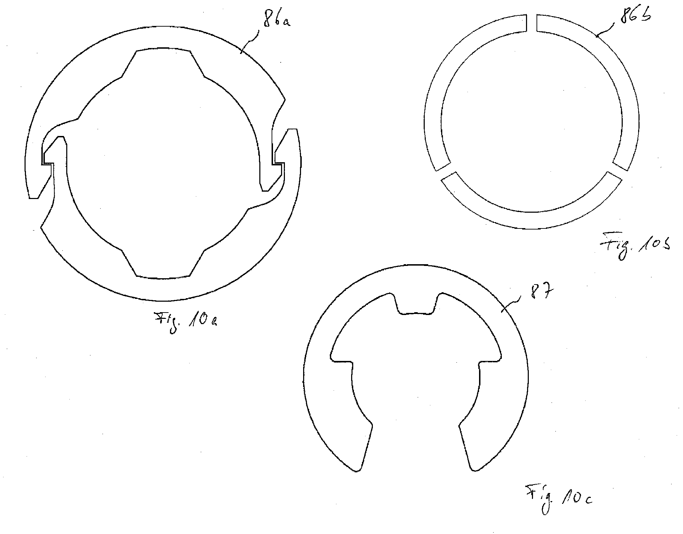

Unterschiedliche Ausführungsformen eines Fixierelements sind zusätzlich in den Figuren 10a bis 10c gezeigt. Diese können, statt der bisher beschriebenen Fixierelemente, in einer Nut 61 auf der äußeren Getriebeeingangswelle 36 zur axialen Fixierung der Lagerung 37 verwendet werden.

Gemäß der Ausführungsform in Figur 10a kann der Sicherungsring 86a aus mehreren Segmenten bestehen. Diese Einzelkomponenten können dann einzeln in einer entsprechenden Parkposition vorpositioniert werden und später in die Haltekontur, das heißt in die Nut 61 der äußeren Getriebeeingangswelle 36, montiert werden. Wenn Einzelkomponente des Sicherungsrings 86a, oder auch eines Sicherungsrings 86b der Figur 10b montiert werden sollen, die die Welle nicht komplett umschließen, ist man freier bei der Wahl der Montageeinrichtung und so können die entsprechenden Einzelkomponenten unabhängig voneinander, sowohl in radialer Richtung oder auch in einer schrägen Richtung mit axialen und radialen Anteilen, innerhalb der Nut 61 oder insbesondere in Halteelementen vormontiert werden. Auf der Getriebeeingangswelle 36 muss dann nicht unbedingt eine Nut 61 bereitgestellt werden, sondern für die einzelnen Segmente oder einzelnen Teile des Sicherungsrings 86a, 86b können auch andere Wellenanschlusskonturen, wie zum Beispiel radiale Bohrungen oder tassenförmige Vertiefungen, aber auch andere Montageöffnungen in der Kupplungsscheibe 31, die auf deutlich größerem Durchmesser liegen, bereitgestellt sein. Die Figur 10a zeigt einen segmentierten Sicherungsring 86a, der nach der Montage miteinander verbunden ist, um ihn gegen Fliehkräfte zu sichern. Eine entsprechende Sicherung kann aber auch durch die bereits geschilderten Hinterschnitte 80 im Lagerinnenring 79 auch für solche Segmente, wie im Sicherungsring 86b der Figur 10b bereitgestellt werden. Durch die Verwendung von mehrteiligen oder segmentierten Sicherungsring 86a, 86b können diese auch nachträglich oder bei defekten Sicherungsringen als backup-Lösungen durch entsprechende Montageöffnungen in der Kupplungsscheibe 31 hindurchgesteckt und an der Getriebeeingangswelle 36 montiert werden. Statt Durchgriffsöffnungen 62 oder Aussparungen 68 können die entsprechenden Segmente der Sicherungsringe 86a, 86b, oder auch ein gesamter Sicherungsring 87, wie er in Figur 10c dargestellt wird, durch Öffnungen zwischen dem Reibbelag und der Zentralplatte der Kupplungsscheibe 31 hindurch geschoben und ausgetauscht werden.

Alternativ zu Sicherungsringen, wie sie inklusive der Sicherungsringe 86a, 86b bisher gezeigt wurden, können auch Sicherungsscheiben 87 gemäß Figur 10c auf die gleiche Art und Weise durch entsprechende große Montageöffnungen direkt von außen auf die Welle montiert werden.

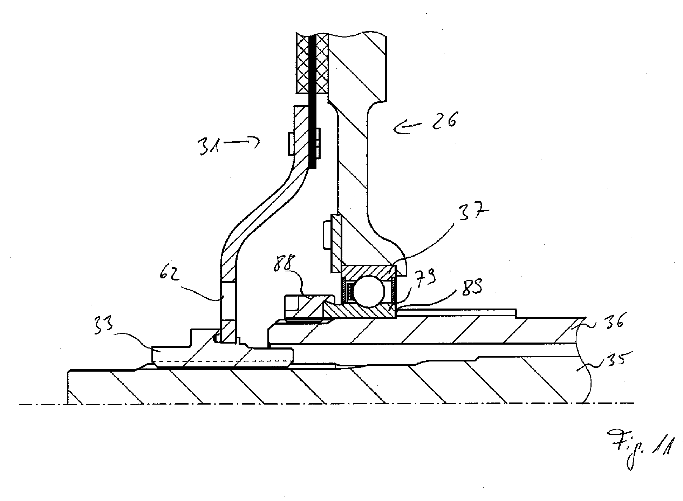

Statt eines Sicherungsrings oder einer Sicherungsscheibe, wie bisher beschrieben, kann auf analoge Art und Weise auch eine Wellenmutter 88, wie sie in den Figuren 11 bis 13 beschrieben wird, in einer entsprechenden Parkposition zwischen Zwischendruckplatte 26 und Kupplungsscheibe 31 vorpositioniert werden.

In der Figur 11 ist daher eine bereits auf der äußeren Getriebeeingangswelle 36 montierte Wellenmutter 88 dargestellt, die durch Durchgriffe 62 mittels eines Werkzeugs, welches nicht dargestellt ist, so auf ein entsprechendes Gewinde der äußeren Getriebeeingangswelle 36 verdreht wurde, dass das Lager 37 entsprechend axial gegen einen axialen Anschlag 89 fixiert wurde. Hierfür kann das Lager 37 insbesondere einen Lagerinnenring 79 aufweisen, der axial mit einer entsprechenden Kontur in die Wellenmutter 88 eingreift. Auf diese Weise wird die axiale Sicherung noch besser fixiert. Außerdem kann die Wellenmutter 88 durch die Kontur verliersicher mit dem Lagerinnenring 79 verbunden werden, was die Montage erheblich erleichtert. Alternativ kann die Wellenmutter 88 natürlich auch mit den zuvor für Sicherungsringe anhand der Abbildungen 3 bis 5 beschriebenen Möglichkeiten montiert werden. Auch die Variante aus Abbildung 2 ist übertragbar, wenn auf der Nabe 33 statt der Nut 61 ein Gewinde oder eine andere für die Wellenmutter 88 geeignete Haltekontur vorgesehen wird.

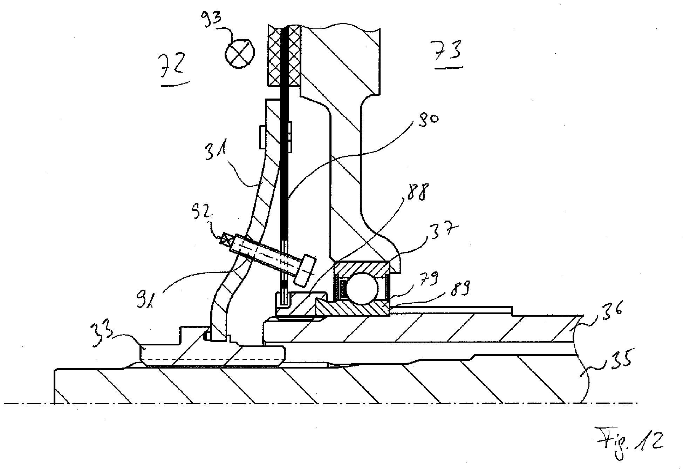

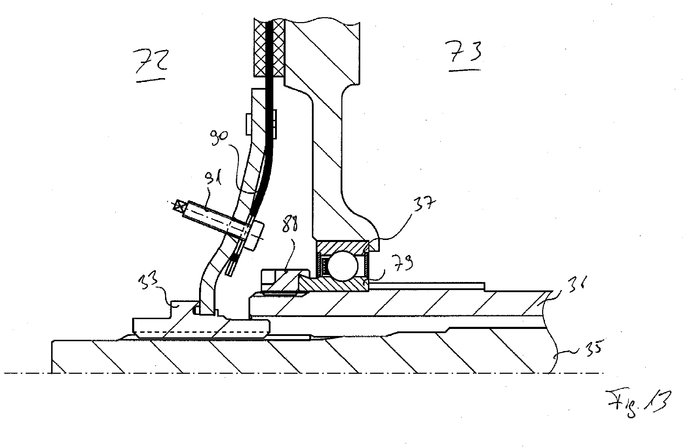

Die Figuren 12 und 13 geben ein Beispiel dafür an, wie die Teile der Kupplungsscheibe 31 selber als Werkzeug zur Montage der Wellenmutter 88 verwendet werden können. Hierfür ragen Bleche 90, insbesondere der Belagfeder radial in den Betriebsbereich der Wellenmutter 88 hinein und greifen in entsprechende Konturen der Wellenmutter 88 ein. Die Kupplungsscheibe 31 ist auf der Antriebsseite 72 drehfest über die Nabe 33 mit der inneren Getriebeeingangswelle 35 verbunden. Es ist vorzusehen, dass die innere Getriebeeingangswelle 35 unabhängig von der äußeren Getriebeeingangswelle 36 rotierbar ist. Auf diese Weise kann die Kupplungsscheibe 31 in Bezug auf die äußere Getriebeeingangswelle 36 in Richtung aus der Papierebene der Abbildung in Richtung des Pfeils 93 umfangsmäßig verdreht werden, wobei sie gleichzeitig über das Blech 90 in entsprechende Ausnehmungen der Wellenmutter 88 eingreift und diese auf einem Gewinde in der äußeren Getriebeeingangswelle 36 so weit verdreht, dass der Lagerinnenring 79 schließlich gegen einen axialen Anschlag 89 schlägt.

Des Weiteren weist die Kupplungsscheibe 31 einen Gewindebolzen 91 auf, der mit dem Blech 90 verbunden ist. Über eine Anschlusskontur beispielsweise einer Vierkantkontur 92 ist dieser Gewindebolzen 91 dann verdrehbar und kann, wie in der Figur 13 dargestellt, zur Motorseite 72 der Kupplungsscheibe 31 herausgedreht werden und somit das Blech 90 nach der axialen Positionierung, das heißt der axialen Fixierung des Lagerinnenrings 79 durch die Wellenmutter 88 aus dem Betätigungs-, das heißt dem Betriebsbereich der Wellenmutter 88 bzw. der Getriebeeingangswellen 35, 36 entfernt werden.

Auf diese Weise ist mit den hier beschriebenen Fixierelementen und Halteelementen bzw. Haltekonturen eine axiale Fixierung der Lagerung 37 der Zwischendruckplatte 26 möglich, ohne dass die Kupplungsscheibe dafür komplexer hergestellt oder im Montageweg zusätzlich zerlegt und zusammengebaut werden müsste. Es sind einfachere, großteiligere Vormontageeinheiten wenigstens umfassend die Zwischendruckplatte 26, die Fixierelemente und die komplette Kupplungsscheibe 31 möglich.

### Bezugszeichenliste

- 1.: Antriebsstrang
- 2.: -
- 3.: Antriebseinheit
- 4.: Kurbelwelle
- 5.: Getriebe
- 6.: Doppelkupplung
- 7.: -
- 8.: Drehschwingungsdämpfungseinrichtung
- 9.: Schraubverbindung
- 10.: Schraubverbindung
- 11.: Eingangsteil von 8
- 12.: Anlasserzahnkranz
- 13.: -
- 14.: -
- 15.: -
- 16.: Federeinrichtung
- 17.: -
- 18.: Ausgangsteil
- 19.: Gleit-/Reibring
- 20.: Tellerfeder
- 21.: -
- 22.: Kupplungsgehäuseteil
- 23.: -
- 24.: Nietverbindung
- 25.: -
- 26.: Zwischendruckplatte
- 27.: -
- 28.: Druckplatte
- 29.: Reibbeläge
- 30.: -
- 31.: Kupplungsscheibe
- 32.: -
- 33.: Nabenteil
- 34.: -
- 35.: innere Getriebeeingangswelle => Vollwelle
- 36.: äußere Getriebeeingangswelle => Hohlwelle
- 37.: Lagerung
- 38.: Nabenteil
- 39.: Druckplatte
- 40.: Reibbeläge
- 41.: -
- 42.: zweite Kupplungsscheibe
- 43.: Nabenteil
- 44.: Kupplungsgehäuse
- 45.: -
- 46.: Betätigungseinrichtung
- 47.: Betätigungseinrichtung
- 48.: Betätigungshebel
- 49.: Betätigungshebel
- 50.: -
- 51.: innerer Flanschring
- 52.: äußerer Flanschring
- 53.: -
- 54.: -
- 55.: Sicherungsring
- 60, 61: Nut
- 62: Durchgriffsöffnung
- 63: Überlappungsbereich
- 64: Loch (Anschlusskontur)
- 65: Kontur
- 66: Halteelement (Haltekontur)
- 67: wiederverwendbares Halteelement (Haltekontur)
- 68: Aussparungen
- 69: Mitnehmerscheiben
- 70: Ringkörper
- 71, 71': Fortsätze (71' radial äußere Fortsätze)
- 72: Antriebsseite
- 73: Getriebeseite
- 74: Konuskontur
- 75: Fortsatz
- 76: Radialkraft
- 77: Runddrahtring
- 78: Wellenabschnitt
- 79: Lagerinnenring
- 80: Hinterschnitt
- 81: Längsschnitte
- 82: Sicherungsring
- 83: radiale Kontur
- 84: axiale Kontur
- 85: Loch (Anschlusskontur)
- 86a, b: mehrteiliger Sicherungsring
- 87: Sicherungsscheibe
- 88: Wellenmutter
- 89: axialer Anschlag
- 90: Blech
- 91: Gewindebolzen
- 92: Vierkantkontur
- 93: Drehrichtung

## Patentansprüche

1. Drehmomentübertragungseinrichtung mit zwei Kupplungen zur Verwendung im Antriebsstrang (1;61) eines Kraftfahrzeugs zur Drehmomentübertragung zwischen einer Antriebseinheit (3;63) mit einer Abtriebswelle (4;64;151) und einem Getriebe (5;65) mit mindestens zwei Getriebeeingangswellen (35,36;95,96;152,153)), die jeweils mit einer Reibbeläge aufweisenden Kupplungsscheibe (31,42;91,102; 174,178) einer der Kupplungen drehfest verbunden sind, wobei zwischen den Reibbelägen der einen Kupplungsscheibe und den Reibbelägen der anderen Kupplungsscheibe eine Zwischendruckplatte (26;78;170) angeordnet ist, die drehfest mit der Abtriebswelle der Antriebseinheit verbindbar und in radialer Richtung zumindest an einer der Getriebeeingangswelle gelagert ist, wobei die Reibbeläge der Kupplungsscheiben (31,42;91,102;174,178) zwischen der Zwischendruckplatte (26;78;170) und den Druckplatten (28,39;88,100;171,172) angeordnet sind, die mit Hilfe einer Betätigungseinrichtung (46,47;106,107;196,197) in, bezogen auf die Getriebeeingangswellen, axialer Richtung relativ zu der Zwischendruckplatte (26;78;170) bewegbar sind, um die Kupplungen zu betätigen, wobei eine an einer der Getriebeeingangswellen befestigte Kupplungsscheibe (31) einteilig ausgeführt ist und ein Fixierelement getriebeseitig in Bezug auf die Kupplungsscheibe (31) in einer ersten Position so gehalten ist, dass im Rahmen der Montage der Drehmomentübertragungseinrichtung in den Antriebsstrang wenigstens die einteilige Kupplungsscheibe (31) getriebeseitig vormontierbar ist, und dass danach oder während der Montage der Kupplungsscheibe (31) das Fixierelement (55) von der ersten Position in eine zweite Position verlagert werden kann, so dass die Lagerung (37) der Zwischendruckplatte an einer Getriebeeingangswelle (36) axial fixiert wird **dadurch gekennzeichnet, dass** sich das Fixierelement (55) sowohl in der ersten, als auch zweiten Position zwischen der Zwischendruckplatte (26;78;170) und der antriebsseitigen Kupplungsscheibe (31) befindet.

2. Drehmomentübertragungseinrichtung nach Anspruch 1,**dadurch gekennzeichnet, dass** das Fixierelement in der ersten Position von einer Haltekontur gehalten wird.

3. Drehmomentübertragungseinrichtung nach Anspruch 2,**dadurch gekennzeichnet, dass** die Haltekontur ein Element der Gruppe Nut, radial über- oder untergreifendes Halteelement, durch die Kupplungsscheibe durchgreifendes Halteelement und axial unterbrochene Haltekontur ist.

4. Drehmomentübertragungseinrichtung nach einem der vorigen Ansprüche,**dadurch gekennzeichnet, dass** es sich bei dem Fixierelement um eine Element der Gruppe Sicherungsring, geschlitzter Sicherungsring, radial unterbrochener Sicherungsring, Sicherungsscheibe, segmentierter Sicherungsring, mehrteiliger Sicherungsring, Runddrahtring, Sprengring und Wellenmutter handelt.

5. Drehmomentübertragungseinrichtung nach einem der vorigen Ansprüche, **dadurch gekennzeichnet, dass** die Kupplungsscheibe (31) und / oder eine Mitnehmerscheibe (69) der Kupplungsscheibe (31) Durchgriffsöffnungen (62) zum durchgreifenden Betätigen und/oder Verlagern des Fixierelements (55) und / oder der Haltekontur (66) vorzugsweise mittels eine Werkzeuges aufweist.

6. Drehmomentübertragungseinrichtung nach einem der vorigen Ansprüche, **dadurch gekennzeichnet, dass** eine Getriebeeingangswelle (36) eine antriebsseitige Kontur (74, 78) wenigstens zur Unterstützung der Verlagerung des Fixierelements zur oder in die zweite Position, insbesondere durch die Verwendung konischer Wellenbereiche und/oder Wellenbereiche, die radial unter das Fixierelement in erster Position ragen, aufweist.

7. Drehmomentübertragungseinrichtung nach einem der vorigen Ansprüche, **dadurch gekennzeichnet, dass** die Kupplungsscheibe (31) oder die Mitnehmerscheibe (69) der Kupplungsscheibe (31) Aussparungen (68) wenigstens zur Aufnahme von durchgreifenden Fortsätzen (71) oder Teilen eines Halteelements (67) oder des Fixierelements (55) aufweist.

8. Drehmomentübertragungseinrichtung nach einem der vorigen Ansprüche, **dadurch gekennzeichnet, dass** die Getriebeeingangswelle (36) axiale Längsschlitze (81) und/oder andere parzielle Freilegungen der Innenkontur des montierten Fixierelementes im Bereich der zweiten Position aufweist, mittels derer ein Werkzeug zur Montage oder Demontage unter das Fixierelement (55) auch in der zweiten Position greifen kann.

9. Drehmomentübertragungseinrichtung nach einem der vorigen Ansprüche, **dadurch gekennzeichnet, dass** das Fixierelement (55) eine oder mehrere Anschlusskonturen aufweist, die mit einem Werkzeug zum Verlagern des Fixierelements (55) zusammenwirken.

10. Drehmomentübertragungseinrichtung nach einem der vorigen Ansprüche,**dadurch gekennzeichnet, dass** wenigstens ein Teil (90) der Kupplungsscheibe (31) axial beweglich oder axial beweglich und radial in den Bereich der ersten und / oder zweiten Position hinreichend alleine oder gemeinsam mit einer Getriebeeingangswelle (35) als Werkzeug das Fixierelement (55) beaufschlagend ausgebildet ist.

## Claims

1. Torque transmission device having two clutches for use in the drive train (1; 61) of a motor vehicle for the transmission of torque between a drive unit (3; 63) with an output shaft (4; 64; 151) and a transmission (5; 65) with at least two transmission input shafts (35, 36; 95, 96; 152, 153) which are connected fixedly in each case to a clutch plate (31, 42; 91, 102; 174, 178), which has friction linings, of one of the clutches so as to rotate with said clutch plate, an intermediate pressure plate (26; 78; 170) being arranged between the friction linings of the one clutch plate and the friction linings of the other clutch plate, which intermediate pressure plate can be connected fixedly to the output shaft of the drive unit so as to rotate with it and is mounted in the radial direction at least on one of the transmission input shafts, the friction linings of the clutch plates (31, 42; 91, 102; 174, 178) being arranged between the intermediate pressure plate (26; 78; 170) and the pressure plates (28, 39; 88, 100; 171, 172) which can be moved with the aid of an actuating device (46, 47; 106, 107; 196, 197) in the axial direction, in relation to the transmission input shafts, relative to the intermediate pressure plate (26; 78; 170), in order to actuate the clutches, a clutch plate (31) which is fastened to one of the transmission input shafts being configured in one piece, and a fixing element being held in a first position on the transmission side in relation to the clutch plate (31) in such a way that, during the mounting of the torque transmission device into the drive train, at least the single-piece clutch plate (31) can be pre-mounted on the transmission side, and that, afterwards or during the mounting of the clutch plate (31), the fixing element (55) can be moved from the first position into a second position, with the result that the mounting (37) of the intermediate pressure plate on a transmission input shaft (36) is fixed axially, **characterized in that** the fixing element (55) is situated between the intermediate pressure plate (26; 78; 170) and the drive-side clutch plate (31) both in the first and in the second position.

2. Torque transmission device according to Claim 1, **characterized in that** the fixing element is held in the first position by a holding contour.

3. Torque transmission device according to Claim 2, **characterized in that** the holding contour is an element from the group comprising a groove, a holding element which engages radially above or underneath, a holding element which engages through the clutch plate, and an axially interrupted holding contour.

4. Torque transmission device according to one of the preceding claims, **characterized in that** the fixing element is an element from the group comprising a securing ring, a slotted securing ring, a radially interrupted securing ring, a securing washer, a segmented securing ring, a multiple-piece securing ring, a round wire ring, a circlip and a shaft nut.

5. Torque transmission device according to one of the preceding claims, **characterized in that** the clutch plate (31) and/or a driver plate (69) of the clutch plate (31) has through-passage openings (62) for actuating and/or moving the fixing element (55) and/or the holding contour (66) in a manner in which the said through-passage openings (62) are engaged through, preferably by means of a tool.

6. Torque transmission device according to one of the preceding claims, **characterized in that** a transmission input shaft (36) has a drive-side contour (74, 78) at least for assisting the movement of the fixing element to or into the second position, in particular by way of the use of conical shaft regions and/or shaft regions which protrude radially below the fixing element in the first position.

7. Torque transmission device according to one of the preceding claims, **characterized in that** the clutch plate (31) or the driver plate (69) of the clutch plate (31) has cut-outs (68) at least for receiving projections (71) or parts of a holding element (67) or the fixing element (55) which engage through the said cut-outs (68).

8. Torque transmission device according to one of the preceding claims, **characterized in that** the transmission input shaft (36) has axial longitudinal slots (81) and/or other partial exposed portions of the inner contour of the mounted fixing element in the region of the second position, by means of which partial exposed portions a tool for mounting or dismantling can engage under the fixing element (55) even in the second position.

9. Torque transmission device according to one of the preceding claims, **characterized in that** the fixing element (55) has one or more connector contours which interact with a tool for moving the fixing element (55).

10. Torque transmission device according to one of the preceding claims, **characterized in that** at least one part (90) of the clutch plate (31) is configured so as to be axially movable or axially movable and reaching radially into the region of the first and/or second position, or so as to load the fixing element (55) alone or together with a transmission input shaft (35) as a tool.

## Revendications

1. Dispositif de transmission de couple avec deux embrayages pour l'utilisation dans la chaîne de transmission (1 ; 61) d'un véhicule automobile pour le transfert de couple entre une unité d'entraînement (3 ; 63) comprenant un arbre de sortie (4 ; 64 ; 151) et une boîte de vitesses (5 ; 65), avec au moins deux arbres d'entrée de boîte de vitesses (35, 36 ; 95, 96 ; 152, 153)), qui sont connectés chacun de manière solidaire en rotation à un disque d'embrayage (31, 42 ; 91, 102 ; 174, 178) de l'un des embrayages, présentant des garnitures de friction, une plaque de pression intermédiaire (26 ; 78 ; 170) étant disposée entre les garnitures de friction de l'un des disques d'embrayage et les garnitures de friction de l'autre disque d'embrayage, laquelle peut être connectée de manière solidaire en rotation à l'arbre de sortie de l'unité d'entraînement et est supportée dans la direction radiale au moins sur l'un des arbres d'entrée de boîte de vitesses, les garnitures de friction des disques d'embrayage (31, 42 ; 91, 102 ; 174, 178) étant disposées entre la plaque de pression intermédiaire (26 ; 78 ; 170) et les plaques de pression (28, 39 ; 88, 100 ; 171, 172) qui peuvent être déplacées à l'aide d'un dispositif d'actionnement (46, 47 ; 106, 107 ; 196, 197), par rapport aux arbres d'entrée de boîte de vitesses, dans une direction axiale par rapport à la plaque de pression intermédiaire (26 ; 78 ; 170), afin d'actionner les embrayages, un disque d'embrayage (31) fixé sur l'un des arbres d'entrée de boîte de vitesses étant réalisé d'une seule pièce et un élément de fixation étant retenu dans une première position du côté de la boîte de vitesses par rapport au disque d'embrayage (31) de telle sorte que dans le cadre du montage du dispositif de transfert de couple dans la chaîne cinématique, au moins le disque d'embrayage d'une seule pièce (31) puisse être prémonté du côté de la boîte de vitesses, et qu'après ou pendant le montage du disque d'embrayage (31), l'élément de fixation (55) puisse être déplacé de la première position dans une deuxième position de telle sorte que le support sur palier (37) de la plaque de pression intermédiaire sur un arbre d'entrée de boîte de vitesses (36) soit fixé axialement, **caractérisé en ce que** l'élément de fixation (55) se trouve à la fois dans la première et dans la deuxième position entre la plaque de pression intermédiaire (26 ; 78 ; 170) et le disque d'embrayage (31) du côté de l'entraînement.

2. Dispositif de transmission de couple selon la revendication 1, **caractérisé en ce que** l'élément de fixation est retenu dans la première position par un contour de retenue.

3. Dispositif de transmission de couple selon la revendication 2, **caractérisé en ce que** le contour de retenue est un élément du groupe comprenant une rainure, un élément de retenue s'engageant radialement par le dessus ou par le dessous, un élément de retenue traversant le disque d'embrayage, et un contour de retenue interrompu axialement.

4. Dispositif de transmission de couple selon l'une quelconque des revendications précédentes, **caractérisé en ce que** l'élément de fixation est un élément du groupe comprenant une bague de fixation, une bague de fixation fendue, une bague de fixation interrompue radialement, une rondelle de fixation, une bague de fixation segmentée, une bague de fixation en plusieurs parties, une bague en fil métallique rond, un jonc, et un écrou d'arbre.

5. Dispositif de transmission de couple selon l'une quelconque des revendications précédentes, **caractérisé en ce que** le disque d'embrayage (31) et/ou un disque d'entraînement (69) du disque d'embrayage (31) présentent des ouvertures de passage (62) pour un actionnement d'engagement et/ou pour un déplacement de l'élément de fixation (55) et/ou du contour de retenue (66) de préférence au moyen d'un outil.

6. Dispositif de transmission de couple selon l'une quelconque des revendications précédentes, **caractérisé en ce qu'**un arbre d'entrée de boîte de vitesses (36) présente un contour du côté de l'entraînement (74, 78), au moins pour supporter le déplacement de l'élément de fixation vers ou dans la deuxième position, en particulier par l'utilisation de régions d'arbre coniques et/ou de régions d'arbre qui font saillie radialement sous l'élément de fixation dans la première position.

7. Dispositif de transmission de couple selon l'une quelconque des revendications précédentes, **caractérisé en ce que** le disque d'embrayage (31) ou le disque d'entraînement (69) du disque d'embrayage (31) présente des évidements (68) au moins pour recevoir des saillies d'engagement (71) ou des parties d'un élément de retenue (67) ou de l'élément de fixation (55).

8. Dispositif de transmission de couple selon l'une quelconque des revendications précédentes, **caractérisé en ce que** l'arbre d'entrée de boîte de vitesses (36) présente des fentes longitudinales axiales (81) et/ou d'autres zones ouvertes partielles du contour interne de l'élément de fixation monté dans la région de la deuxième position, au moyen desquelles un outil pour le montage ou le démontage peut s'engager sous l'élément de fixation (55) également dans la deuxième position.

9. Dispositif de transmission de couple selon l'une quelconque des revendications précédentes, **caractérisé en ce que** l'élément de fixation (55) présente un ou plusieurs contours de raccordement qui coopèrent avec un outil pour déplacer l'élément de fixation (55).

10. Dispositif de transmission de couple selon l'une quelconque des revendications précédentes, **caractérisé en ce qu'**au moins une partie (90) du disque d'embrayage (31) est réalisée en tant qu'outil, de manière à solliciter l'élément de fixation (55) en s'étendant de manière axialement déplaçable ou axialement déplaçable et radialement dans la région de la première et/ou de la deuxième position, à elle seule ou conjointement avec un arbre d'entraînement de boîte de vitesses (35).
